(19) Europäisches Patentamt
European Patent Office
Office européen des brevets

(11) EP 0 629 674 B1

(12) EUROPEAN PATENT SPECIFICATION

(45) Date of publication and mention
of the grant of the patent:
**11.03.1998 Bulletin 1998/11**

(51) Int Cl.6: **C09J 7/02**, B32B 27/08,
F16L 55/168

(21) Application number: **94250095.0**

(22) Date of filing: **14.04.1994**

(54) **Pipewrap having a solid primer-adhesive layer**

Rohrumhüllung mit fester Grundierklebstoffschicht

Emballage pour tuyau, ayant une couche solide primaire-adhésive

(84) Designated Contracting States:
**BE DE FR GB IT NL**
Designated Extension States:
**SI**

(30) Priority: **07.06.1993 US 72019**

(43) Date of publication of application:
**21.12.1994 Bulletin 1994/51**

(73) Proprietor: **THE KENDALL COMPANY**
**Mansfield, Massachusetts 02048 (US)**

(72) Inventors:
• **Patil, Bhalchandra B.**
**Burlington, MA 01803 (US)**
• **Kellner, Jordan D.**
**Wayland, MA (US)**

(74) Representative: **UEXKÜLL & STOLBERG**
**Patentanwälte**
**Beselerstrasse 4**
**22607 Hamburg (DE)**

(56) References cited:
**EP-A- 0 421 607     EP-A- 0 465 150**
**EP-A- 0 574 060**

**Description**

## <u>BACKGROUND OF THE INVENTION</u>

The present invention is directed primarily to the protection of metal pipelines and, more particularly, to the protection of pipelines intended for inground implantation against corrosion and other degradative environmental forces.

The patent literature is replete with references to coatings and adhesive wraps for protecting metal pipelines. A particularly efficacious system for this purpose uses a rubber-based primer coating on the pipe surface over which a pressure-sensitive rubber-based adhesive tape is spirally wound.

While certainly not intended to be an exhaustive search of the patent art, illustrative patents will include the following United States Patents assigned to The Kendall Company, assignee of this invention: 4,472,231; 4,933,235; 4,946,529; and 5,108,809.

As described in the patent literature, a typical rubber-based primer coating may, for example comprise a solution or a dispersion of reclaimed natural rubber and at least one tackifier in a volatile solvent or mixture of solvents such as heptane, toluene, etc. The organic solvent solution may be applied to the metal pipe surface by spraying, brushing, dipping or rugging, after which the solvent is vented by evaporation into the ambient atmosphere.

After the primer coating is applied, an elastomeric pressure-sensitive adhesive tape is then spirally wound over the primer coating to provide a protective pipewrap. Most preferably, the pipewrap will comprise an innerwrap of this description over which a second or outerwrap of pressure-sensitive adhesive tape is then wound.

The adhesive tapes will have an impact resistant backing, e.g. a polyolefin such as polyethylene, polypropylene, etc. Preferred backing materials comprise high density polyethylene (HDPE) alone or in combination with low density polyethylene (LDPE) and/or linear low density polyethylene (LLDPE).

Illustrative elastomers (i.e. polymeric materials having rubber-like properties) disclosed as useful for pipewraps include natural rubber, cyclized rubber, styrene-butadiene copolymer (SBR), acrylonitrile-butadiene copolymer (NBR), chlorinated rubber, polychloroprene (neoprene), polysulfide rubber, carboxylic elastomers, silicone rubber, polyurethane rubber, acrylonitrile-butadiene-styrene (ABS), reclaimed rubber, butyl rubber, polyisoprene (synthetic natural rubber), polyisobutylene, ethylene-propylene-diene monomer terpolymer rubber (EPDM), etc.

Suitable tackifiers for providing the desired increased adhesion heretofore disclosed in the patent literature include the following: rosins such as gum, wood or tall oil rosin; modified rosins, e.g. polymerized rosin or hydrogenated rosin; rosin esters such as pentaerythritol-wood rosin, glycerine-hydrogenated rosin, glycerine-highly stabilized rosin, and pentaerythritol-highly stabilized rosin; polymerized petroleum hydrocarbons, e.g. cycloaliphatic hydrogenated olefins, olefins, aliphatic petroleum hydrocarbons, modified aromatic hydrocarbons, dicyclopentadiene, mixed olefins, alkyl-aromatic petroleum hydrocarbons; polymerized terpenes such as alpha-pinene, d-limonene, beta-pinene, terpene, etc.; miscellaneous resins such as alpha-methyl styrene, styrene, terpene phenolic, coumarone-indenes, etc.; and metallic resinates such as mixed calcium/zinc (e.g. Pexate 329, Pexate 549, Zitro, Zirex or Zinar) and zinc resinates (such as Pexate 511, Pexate 510E or Pexate 508E), etc.

In addition to these essential ingredients, namely elastomer and tackifying resin, the adhesive formulations may and typically will also contain one or more additional reagents performing specific desired functions. As illustrations of such additives, mention may be made of fillers such as carbon black, zinc oxide, clays, chalk, whitings, calcium silicate and barium sulfate in order to reduce the cost, increase the specific gravity, and/or to raise the viscosity; plasticizers and softeners such as mineral oil and lanolin; antioxidants, e.g. aromatic amine antioxidants, substituted phenols, hydroquinone (p-dihydroxybenzene); curing agents such as sulfur and organic peroxides; accelerators; sequestering agents and biocides such as bactericides.

Pipewrap systems of the foregoing description have enjoyed considerable commercial success over the years as a protective system for pipelines.

However, recent sensitivity and awareness of environmental problems have made it imperative that the volatile solvent primer solutions heretofore used be replaced with an environment-friendly alternative.

Systems utilizing a primer in a volatile solvent are either outlawed today for environmental reasons or about to be outlawed. Such solvents generally fall into one of two categories: (1) those outlawed today because they contribute to air pollution or (2) those such as 1,1,1-trichloroethane (TCE) which do not contribute to air pollution and are exempt from regulations prohibiting the use of organic solvents that pollute air, but are soon to be outlawed throughout the U. S. if not worldwide because they are classified as an ozone depletion chemical.

Consequently, in primer/tape pipeline systems it becomes increasingly imperative to develop a viable system which does not utilize a volatile organic solvent vehicle for the primer.

Stated simply, the task of this invention may be said to provide a pipewrap system employing an elastomeric pressure-sensitive adhesive tape and a primer coating providing optimum adhesion of the tape to the pipe surface in which volatile solvents heretofore employed as the vehicle for the primer coating have been eliminated.

## BRIEF DESCRIPTION OF THE INVENTION

In accordance with the present invention, this task is solved in an elegant manner by providing an adhesive tape as claimed in claim 1.

## DETAILED DESCRIPTION OF THE INVENTION

As was heretofore mentioned, the present invention is directed to a primer/adhesive tape protective pipewrap system, the task of the invention being to replace the known volatile solvent primer solutions with an environmentally friendly primer which does not utilize organic solvents.

In accordance with this invention the task is solved by incorporating a solid primer to be described in detail hereinafter into a per se known elastomeric pressure-sensitive adhesive tape of the type heretofore employed as a protective pipewrap.

In its simplest form, the present invention consists essentially of a laminar tape wrap comprising an impact-resistant backing sheet carrying on one surface thereof, in order, an elastomeric pressure-sensitive adhesive layer and the solid primer/adhesive layer.

The backing sheet may, for example, be a polyolefinic material on the order of 0,127-0,38 mm (5-15 mils) thick. As heretofore mentioned, a preferred backing will be a blend of HDPE and LDPE and/or LLDPE.

The pressure-sensitive adhesive layer on the backing may comprise a layer on the order of 0,2-0,76 mm (8-30 mils) thick containing any of the elastomers and tackifying resins heretofore mentioned. The preferred elastomer is butyl rubber and the preferred tackifier is a hydrocarbon tackifying resin or a mixture of such resins. The adhesive layer may also contain other reagents performing specific desired functions such as those additives previously mentioned in the discussion of the prior art pipewraps.

The solid primer layer may be on the order of 0,025-0,127 mm (1-5 mils) thick and will contain, as essential ingredients, a synthetic thermoplastic rubber and one or more tackifiers, e.g. a known tackifier such as one of the hydrocarbon class of tackifiers, the ratio by weight of the thermoplastic rubber to tackifier preferably being on the order of 1:1 to 1:4 or, stated another way, the amount of tackifier by weight is preferably on the order of 100 to 400 phr.

Useful thermoplastic rubbers are triblock rubbers having styrene end blocks and include the triblock rubbers of the "Kraton" (Shell Chemical) D or G series having styrene end blocks and a saturated or unsaturated rubber midblock. Preferred are the styrene-isoprene-styrene (S-I-S) triblocks, although the styrenebutadiene-styrene (S-B-S) and styrene-ethylene/butylene-styrene (S-EB-S) triblocks are also contemplated.

While other thermoplastic rubbers will be readily suggested to the skilled worker in the light of this description, the thermoplastic rubbers of the "Kraton" series are preferred because of their unusual combination of high strength and low viscosity for easy thermoplastic processing at elevated temperatures or in solution. Their strength is equal to that of vulcanized rubber yet they do not require vulcanization.

As will be appreciated, the solid primer layer may also contain additional reagents or components performing specific desired functions. For example, it may contain a corrosion inhibitor, a plasticizer to adjust viscosity, an antioxidant, a stress corrosion cracking inhibitor, a filler, a colorant, a crosslinking agent, etc.

The novel primer tapes of this invention may be prepared in various ways and the method of preparation to be employed per se comprises no part of this invention, but will instead be a matter of individual selection within the expected judgment of the skilled worker in the light of this description.

By way of illustration, the primer tape may be prepared by first extruding the tape adhesive layer onto the tape backing. The solid primer may be coated, e.g. by extrusion, onto a release sheet. Thereafter, a roll of the tape containing the adhesive layer and a roll of the release sheet containing the solid primer may be fed in superposition between one or more pairs of superposed pressure rollers spaced apart at the requisite gap to provide sufficient pressure to adhere the free surface of the adhesive layer to the free surface of the solid primer, thereby providing a laminar pipewrap having a release sheet on its outer surface.

While the foregoing describes the invention in its simplest form, it may be what is termed the "inner wrap" in a pipewrap system having both an innerwrap and an overlying outerwrap.

In such a system, the outerwrap may comprise an impact-resistant backing of the foregoing description on the order of 0,38-0,76 mm (15-30 mils) thick carrying a rubber-based pressure-sensitive adhesive layer on the order of 0,127-0,76 mm (5-30 mils) thick.

In a particularly preferred embodiment, increased adhesion of the outerwrap to the underlying innerwrap and to itself at the overlap is provided by also adhering a solid primer layer onto the surface of the adhesive layer of the outerwrap as well, in which case the protective system covering the pipe can be said to be laminar structure consisting of outerwrap backing/adhesive/solid primer/inner backing/adhesive/solid primer.

Apart from solving the task of avoiding venting volatile solvent to the atmosphere, the present invention additionally provides certain other significant advantages over the state of the art utilizing liquid primers.

First, a faster build-up of adhesion is provided, e.g. about 30 minutes rather than the approximate four hours with the liquid primer. When utilizing the liquid primer, if sufficient time is not provided between the application of the pipewrap and inground implantation, e.g. near four hours, there is the tendency for shear to occur when the pipe strikes an object while being implanted.

Secondly, while the liquid primer coated onto the pipe only sticks to the pipe and the adhesive surface immediately covering the pipe, the solid primer on the tape surface in accordance with this invention also adheres at each overlap as the tape is spirally wrapped over the pipe.

Also, the novel system of this invention utilizes a one-step application to the pipe, rather than the usual two-step for coating the primer followed by the tape over wrap.

Next, only a single item need be ordered and warehoused.

Finally, the problems of disposing of the hazardous waste empty solvent containers are obviated.

The following examples show by way of illustration and not by way of limitation the practice of this invention.

### EXAMPLE 1

This example illustrates the general preparation of the solid primer coatings of this invention.

Under a blanket of nitrogen, the tackifying resin is first heated above its melting point (e.g 176.7°C (350°F)), after which the thermoplastic rubber component and then the other additives are added with stirring to the liquid tackifier. The resulting mixture is then allowed to cool to room temperature to provide the desired solid primer.

In the manner previously described, the solid primer provided with a release sheet may be laminated to the free adhesive surface of the adhesive tape for wrapping over the metal pipe surface.

The following examples are illustrative of useful primer layers prepared in the foregoing manner and which are contemplated by this invention.

| EXAMPLE 2 | | |
|---|---|---|
| **Material** | **PHR** | **% By Weight** |
| Hydrocarbon tackifier (Arizona Chemical) | 375.00 | 67.2 |
| S-I-S Copolymer | 100.00 | 17.9 |
| Plasticizer | 80.00 | 14.3 |
| Corrosion Inhibitor | 1.00 | 0.2 |
| Antioxidant | 2.00 | 0.4 |
| **TOTAL** | 558.00 | 100.0 |

| EXAMPLE 3 | | |
|---|---|---|
| **Material** | **PHR** | **% By Weight** |
| Hydrocarbon Tackifier | 300.00 | 64.8 |
| Thermoplastic Elastomer | 80.00 | 17.3 |
| Plasticizer | 80.00 | 17.3 |
| Corrosion Inhibitor | 2.00 | 0.4 |
| Antioxidant | 1.00 | 0.2 |
| **TOTAL** | 463.00 | 100.00 |

| EXAMPLE 4 | | |
|---|---|---|
| **Material** | **PHR** | **% By Weight** |
| Hydrocarbon Tackifier | 300.00 | 62.1 |
| Thermoplastic Elastomer | 100.00 | 20.7 |
| Plasticizer | 80.00 | 16.6 |
| Corrosion Inhibitor | 2.00 | 0.4 |
| Antioxidant | 1.00 | 0.2 |
| **TOTAL** | 483.00 | 100.00 |

| EXAMPLE 5 | | |
|---|---|---|
| **Material** | **PHR** | **% By Weight** |
| Hydrocarbon Tackifier | 300.00 | 61.9 |
| Thermoplastic Elastomer | 100.00 | 20.6 |
| Plasticizer | 80.00 | 16.5 |
| Corrosion Inhibitor | 2.00 | 0.2 |
| Antioxidant | 1.00 | 0.4 |
| Crosslinking Agent | 2.00 | 0.4 |
| **TOTAL** | 485.00 | 100.00 |

From the foregoing description and illustrative examples it will thus be seen that the present invention not only provides an elegant and cost-effective solution to the stated task of the invention namely, obviating the need for objectionable organic solvents, but also provides significant other advantages.

## Claims

1. An adhesive tape adapted for protecting the surface of a metal pipe against degradative environmental forces comprising a first impact-resistant backing material carrying on one surface thereof, in order, an elastomeric pressure-sensitive adhesive layer and an outer solid primer layer comprising a synthetic thermoplastic rubber and at least one tackifier, characterized in that the thermoplastic rubber is a triblock having styrene end blocks.

2. An adhesive tape as defined in Claim 1 wherein the solid primer layer is on the order of 0,025 to 0,127 mm (1.0 to 5.0 mils) thick.

3. An adhesive tape as defined in Claim 2 wherein the primer layer includes a corrosion inhibitor.

4. An adhesive tape as defined in Claim 1 wherein the ratio by weight of rubber to tackifier in the primer layer is on the order of from 1:1 to 1:4.

5. An adhesive tape as defined in Claim 1 wherein the triblock is one of the styrene-isoprene-styrene series.

6. An adhesive tape as defined in Claim 1 wherein a second elastomeric pressure-sensitive adhesive layer carried on a second impact-resistant backing material is laminated to the outer surface of the first backing material.

7. An adhesive tape as defined in Claim 6 wherein the second adhesive layer is laminated to the first backing material by means of a second solid primer layer disposed between the second adhesive layer and the first backing material.

8. An adhesive tape as defined in Claim 7 wherein the impact-resistant backing material comprises a polyolefin.

9. An adhesive tape as defined in Claim 7 wherein the polyolefin is polyethylene.

10. An article of manufacture comprising a metal pipe the outer surface of which is covered by an adhesive tape as defined in Claim 1.

## Patentansprüche

1. Klebestreifen, der dazu ausgestaltet ist, die Oberfläche einer Metallröhre gegen schädigende Umwelteinflüsse zu schützen, mit einem ersten schlagfesten Trägermaterial, bei dem auf einer Fläche davon der Reihe nach eine elastische, selbsthaftende Klebeschicht und eine äußere, feste Grundierschicht gehalten sind, die einen synthetischen, thermoplastischen Kautschuk und zumindest einen Klebrigmacher enthält, dadurch gekennzeichnet, daß der thermoplastische Kautschuk ein Dreier-Block mit Styrol-Endblöcken ist.

2. Klebestreifen nach Anspruch 1, bei dem die feste Grundierschicht eine Dicke von etwa 0,025 bis 0,127 mm (1,0 bis 5,0 Mils) hat.

3. Klebestreifen nach Anspruch 2, bei dem die Grundierschicht einen Korrosionshemmstoff enthält.

4. Klebestreifen nach Anspruch 1, bei dem das Gewichtsverhältnis von Kautschuk zu Klebrigmacher in der Grundierschicht etwa von 1:1 bis 1:4 beträgt.

5. Klebestreifen nach Anspruch 1, bei dem der Dreier-Block einer aus der Styrol-Isopren-Styrol-Reihe ist.

6. Klebestreifen nach Anspruch 1, bei dem eine zweite elastische, selbsthaftende Klebeschicht, die auf einem zweiten schlagfesten Trägermaterial gehalten ist, auf die äußere Fläche des ersten Trägermaterials aufgebracht ist.

7. Klebestreifen nach Anspruch 6, bei dem die zweite Klebeschicht mittels einer zweiten festen Grundierschicht, die sich zwischen der zweiten Klebeschicht und dem ersten Trägermaterial befindet, auf das erste Trägermaterial aufgebracht ist.

8. Klebestreifen nach Anspruch 7, bei dem das schlagfeste Trägermaterial ein Polyolefin enthält.

9. Klebestreifen nach Anspruch 7, bei dem das Polyolefin Polyethylen ist.

10. Fabrikationsgegenstand mit einer Metallröhre, deren äußere Fläche mit einem Klebestreifen nach Anspruch 1 bedeckt ist.

**Revendications**

1. Ruban adhésif adapté pour protéger la surface d'un tube ou d'une conduite métallique contre des forces de dégradation environnantes, comprenant une première matière dorsale résiliente, portant, sur l'une de ses surfaces, dans l'ordre indiqué, une couche d'adhésif sensible à la pression élastomérique et une couche primaire solide externe comprenant un caoutchouc thermoplastique synthétique et au moins un agent conférant de l'adhésivité, caractérisé en ce que le caoutchouc thermoplastique est triséquencé et possède des séquences terminales de styrène.

2. Ruban adhésif suivant la revendication 1, caractérisé en ce que la couche primaire solide a une épaisseur de l'ordre de 0,025 à 0,127 mm (1,0 à 5,0 mils).

3. Ruban adhésif suivant la revendication 2, caractérisé en ce que la couche primaire comprend un inhibiteur de corrosion.

4. Ruban adhésif suivant la revendication 1, caractérisé en ce que le rapport pondéral caoutchouc à agent conférant de l'adhésivité dans la couche primaire varie de 1:1 à 1:4.

5. Ruban adhésif suivant la revendication 1, caractérisé en ce que le caoutchouc triséquencé en est de la série styrène-isoprène-styrène.

6. Ruban adhésif suivant la revendication 1, caractérisé en ce qu'une seconde couche adhésive sensible à la pression élastomérique portée par une seconde matière dorsale résiliente est lamifiée à la surface externe de la première matière dorsale.

7. Ruban adhésif suivant la revendication 6, caractérisé en ce que la seconde couche adhésive est lamifiée à la première matière dorsale, à l'aide d'une seconde couche primaire solide disposée entre la seconde couche adhésive et la première matière dorsale.

8. Ruban adhésif suivant la revendication 7, caractérisé en ce que la matière dorsale résiliente comprend une polyoléfine.

9. Ruban adhésif suivant la revendication 7, caractérisé en ce que la polyoléfine est du polyéthylène.

**10.** Article de fabrication comprenant une conduite ou un tube métallique dont la surface externe est revêtue d'un ruban adhésif suivant la revendication 1.